# EUROPEAN PATENT SPECIFICATION

(11) **EP 0 362 151 B1**
(45) Date of publication and mention of the grant of the patent: **07.01.1993**
(21) Application number: 89830373.0
(22) Date of filing: 05.09.1989
(51) Int. Cl.: C03C 3/087, C03C 17/245

(54) **Glass, particularly for use in photovoltaic cells and liquid crystals**
Glas, insbesondere für die Anwendung in photovoltaischen Zellen und Flüssigkristallen
Verre, en particulier pour usage dans des cellules photovoltaiques et cristaux liquides

(30) Priority: 06.09.1988 IT 4832088
(43) Date of publication of application: 04.04.1990
(73) Proprietor: SOCIETA' ITALIANA VETRO - SIV - S.p.A., 66050 San Salvo (CH) (IT)
(72) Inventor: Boattini, Pier Paolo, I-66054 Vasto CH (IT)
(74) Representative: Bazzichelli, Alfredo

(56) References cited:
- DE-A- 2 114 074
- FR-A- 2 536 203
- GB-A- 1 171 527
- CHEMICAL ABSTRACTS, vol. 106, no. 16, April 1987, page 314, abstract no. 124648u, Columbus, Ohio, US; & JP-A-61 236 631 (OHARA OPTICAL GLASS MFG CO.) 21-10-1986

## Description

The present invention relates to a glass having improved characteristics of electrical conductivity and opalescence, in particular high conductivity values and a low level of opalescence.

This glass is particularly useful as a substrate of photovoltaic cells or as a transparent electrode for liquid cristals.

It is known from the state of the art that sheets of glass having a transparent coating of metallic oxides are capable of forming a shield against impinging solar radiation. Sheets of this type are used to conserve energy in substitution for normal sheets of glass.

The coatings are usually laid on the glass using a process of vapor phase deposition of oxides which is known from the state of the art as CVD process, or using a process of metal deposition by cathodic spraying, known from the state of the art as sputtering.

In the use of glass as a substrate for photovoltaic cells or as a transparent electrode for liquid crystals, it is necessary, for obvious reasons of encumbrance, to make use of very thin sheets of glass, which also present good electric conductivity and a low level of opalescence.

A sheet of glass normally coated with energy absorbing oxides through a CVD process, also has good characteristics of electric conductivity.

Said conductivity is generally proportional to the thickness of the coating and is a function of the type of composition used to obtain the coating itself.

However, an increase in the thickness of the coating also produces an increase in the opalescence level of the glass itself, with a consequent reduction of the light transmission, and the latter is an undesired effect.

In JP-A-61.236631 a glass useful as a substrate for solar cells and photomasks is described having a composition in weight per cent of SiO₂ 50 to 70, Al₂O₃ 22.5 to 35, CaO o.5 to 8, Sro and/or BaO 1 to 8.

It is thought that an increase in level of opalescence and conductivity of the coating is determined to a great extent by the disturbing action of ions of several elements present in the composition of the glass itself.

Therefore, in order to obtain still higher conductivity values and a fairly low level of conductivity with a coating of reduced thickness, it is known to isolate the coating from the surface of the glass substrate by interposing a barrier coating, preferably of SiO₂, which serves in fact the purpose of avoiding the disturbances mentioned above.

It is evident that this treatment requires an increased time and production cost, with negative effects on the competitiveness of the finished product.

It has now been suprisingly found that the problems mentioned herebefore can be solved by a suitable modification of the composition of the glass used as a substrate.

The proportion of Al₂O₃ present in the composition has in fact been considerably increased, and at the same time the proportion of CaO present has been considerably decreased.

In particular a glass has been prepared having a percentage of Al₂O₃ greater than 15% and a percentage of CaO lower than 1%, whereas all the other elements have undergone only minor variations.

Samples of the glass having said modified composition have been coated with coatings having an oxide base, using the CVD deposition process as described in Italian patents No. 1.140.560, No. 1.134.153 and No. 1.155.007 and in European patent No. 023471.

In practice the coatings are obtained either by hydrolysis of lead chloride or by means of thermic decomposition of organometallic substances containing lead, the latter either being doped with fluorine or not.

On all the samples examined a considerable increase of electric conductivity and a consistent proportional reduction of the level of opalescence have been obtained.

The object of the present invention is a sheet of glass for use as a substrate for photovoltaic cells and/or as a transparent electrode for liquid crystals, having a high electric conductivity and a low level of opalescence, characterized in that is comprises a transparent conductive layer, deposited on one of its two surfaces by means of a CVD process and a composition of the glass used as a base substrate in which the ratio of Al₂O₃ to CaO if from 30:1 to 40:1 by weight and the percentage of Al₂O₃ is about 16% by weight.

The characteristics of the invention will be more completely explained by the following examples:

### Example 1

A glass substrate has been used, the composition of which is the following:
SiO₂ 62.6%, Al₂O₃ 16.40%, Fe 0.074%, TiO₂ 0.71%, CaO 0.47%, MgO 3.45%, Na₂O 12.30%, K₂O 3.39%, As₂O₃ 0.62%.

On said sheet of glass, using the apparatuses and methods described in the Italian and European patents mentioned above, coatings have been deposited having different thicknesses.
- 1) Thickness 0.2 µm: resistivity 6.8x10⁻⁴ ohm.cm opalescence 0.4%
- 2) Thickness 0,415 µm: resistivity 4.7x10⁻⁴ ohm.cm opalescence 1.3%
- 3) Thickness 0.626 µm: resistivity 4.1x10⁻⁴ ohm.cm opalescence 2.5%

### Example 2

A sodium-calcium glass has been used, produced using the float method, the composition of which is the following: SiO₂ 72.4%, Al₂O₃ 0.45%, Fe 0.12%, TiO₂ 0.05%, CaO 8.7%, MgO 3.90%, Na₂O 13.84%, K₂O 0.25%, SO₃ 0.29%.

On said sheet of glass using the same method as in the preceding example, coatings have been deposited having different thicknesses.
- 1) Thickness 0.2 µm: resistivity 18.2x10⁻⁴ ohm.cm opalescence 0.6%
- 2) Thickness 0.389 µm: resistivity 8.2x10⁻⁴ ohm.cm opalescence 2.4%
- 3) Thickness 0.6 µm: resistivity 7.9x10⁻⁴ ohm.cm opalescence 3.9%

When comparing the resistivity and opalescence values obtained in the two examples above, a considerable improvement can be seen both in the electric conductivity and in the level of opalescence in example 1, which refer to a sheet of glass presenting a high proportion of Al₂O₃ and an extremely low proportion of CaO.

## Claims

1. A sheet of glass for use as a substrate for photovoltaic cells and/or as a transparent electrode for liquid cristals, having a high electric conductivity and a low level of opalescence, characterized in that it comprises a transparent conductive layer, deposited on one of its two surfaces by means of a CVD process and a composition of the glass used as a base substrate in which the ratio of Al₂O₃ to CaO is from 30:1 to 40:1 by weight and the percentage of Al₂O₃ is about 16% by weight.

2. A sheet of glass according to claim 1, in which the percentage of CaO by weight is preferably 0.5%.

3. A sheet of glass according to claim 1 or 2, characterized in that the transparent conductive layer is obtained by means of hydrolisis of lead chloride.

4. A sheet of glass according to claim 1 or 2, characterized in that the transparent conductive layer is obtained by means of thermal decomposition of organometallic compounds containing lead.

## Patentansprüche

1. Glasscheibe für den Gebrauch als Substrat für Photovoltaik-Zellen und/oder als durchsichtige Elektrode für Flüssigkristalle, mit leichter elektrischer Leitfähigkeit und niedriger Opaleszenz, dadurch gekennzeichnet, dass sie eine durchsichtige leitfähige Schicht enthält, die auf einer der beiden Oberflächen durch einen CVD Vorgang aufgetragen wird, mit einer Zusammensetzung des als Basis-Unterlage dienenden Glases, in der der Anteil von Al₂O₃ gegenüber dem von CaO, von 30:1 bis zu 40:1 des Gewichtes ist, und der Prozentsatz von Al₂O₃ ungefähr 16 Gewichtsprozent beträgt.

2. Glasscheibe nach Anspruch 1, in der der Gewichtsprozentsatz von CaO vorzugsweise 0,5% beträgt.

3. Glasscheibe nach Anspruch 1 oder 2, dadurch gekennzeichnet, dass die durchsichtige leitfähige Schicht durch Hydrolyse von Bleichlorid erhalten wird.

4. Glasscheibe nach Anspruch 1 oder 2, dadurch gekennzeichnet, dass die durchsichtige leitfähige Schicht durch thermische Spaltung von Blei enthaltenden metallorganischen Verbindungen erhalten wird.

## Revendications

1. Feuille de verre à utiliser pour des cellules photovoltaïques et, ou comme un électrode transparent pour des cristaux liquides, ladite feuille ayant une conductibilité électrique élevée et un niveau d'opalescence bas, caractérisée en ce qu'elle comprend une couche conductive transparente, déposée sur l'une de ses surfaces au moyen d'un procédé CVD et une composition de verre utilisée comme substrat de base où le rapport entre Al₂O₃ et CaO est de 30:1 à 40:1 en poids et le pourcentage d'Al₂O₃ est d'environ 16% en poids.

2. Feuille de verre selon la revendication 1, où le pourcentage de CaO en poids est de préférence 0,5%.

3. Feuille de verre selon la revendication 1 ou 2, caractérisée en ce que la couche conductive transparente est obtenue par hydrolyse de chlorure de plomb.

4. Feuille de verre selon la revendication 1 ou 2, caractérisée en ce que la couche conductive transparente est obtenue par décomposition thermique de composés métalloorganiques contenant du plomb.
